Europäisches Patentamt

European Patent Office

Office européen des brevets

(19)

(11) Veröffentlichungsnummer: **0 402 708**
**A1**

# (12) EUROPÄISCHE PATENTANMELDUNG

(21) Anmeldenummer: 90110337.4

(22) Anmeldetag: 31.05.90

(51) Int. Cl.⁵: **B29C 67/14, B29B 15/12**

(30) Priorität: 13.06.89 DE 3919202

(43) Veröffentlichungstag der Anmeldung:
19.12.90 Patentblatt 90/51

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Becker, Robert, Dr.**
**Martin-Heidegger-Strasse 8**
**D-5090 Leverkusen 3(DE)**
Erfinder: **Goldmann, Gerd, Dr.**
**Emil-Feinendegen-Strasse 1**
**D-4150 Krefeld 12(DE)**
Erfinder: **Lothar, Preis, Dr.**
**August-Kierspel-Strasse 42**
**D-5060 Bergisch Gladbach 2(DE)**

(54) **Leichtverbundwerkstoff mit Duromermatrix.**

(57) Leichtverbundwerkstoff, der Verstärkungsfasern in einer Duromermatrix enthält und den man dadurch erhalten hat, daß man voluminöse, dreidimensionale Gebilde aus über 50 mm langen Verstärkungsfasern, die in Form eines Gestrickes oder Gewirkes mit einem Hohlraumanteil von mindestens 50 Vol.-% vorliegen, mit einem duromeren Harz so versehen hat, daß im Leichtverbundwerkstoff Hohlräume enthalten sind.

EP 0 402 708 A1

## Leichtverbundwerkstoff mit Duromermatrix

Die Erfindung betrifft einen Leichtverbundwerkstoff, der Verstärkungsfasern in einer Duromermatrix enthält und den man dadurch erhalten hat, daß man voluminöse, dreidimensionale Gebilde aus über 50 mm langen Verstärkungsfasern, die in Form eines Gestrickes oder Gewirkes mit einem Hohlraumanteil von mindestens 50 Vol.-% vorliegen, mit einem duromeren Harz so versehen hat, daß im Leichtverbundwerstoff Hohlräume enthalten sind. Der Leichtverbundwerkstoff wird dadurch erhalten, daß man das voluminöse Gestrick oder Gewirke aus über 50 mm langen Verstärkungsfasern und mit einem Hohlraumanteil von mindestens 50 Vol.-% mit den Einsatzstoffen eines duromeren Harzes imprägniert, die nicht an den Verstärkungsfasern haftenden Harzeinsatzstoffe entfernt und das Gebilde dann aushärtet.

Es sind schon Verbundwerkstoffe bekannt, welche man als Hohlräume-enthaltende, voluminöse, dreidimensionale Verstärkungsfasergewirke mit Duramermatrix bezeichnen kann.

Es sind dies primär ebene, flache Maschengebilde, welche, mit den Einsatzstoffen eines Duromeren (z.B. eines Phenolharzes) versehen, in einem Formwerkzeug ausgehärtet werden, das dem Maschengebilde eine dreidimensionale Form gibt, indem Noppen erzeugt werden, deren Höhe ein Vielfaches der Maschengröße beträgt (s. Hoechst High Chem Magazin Nr. 3, 1987, S. 55). Solche Strukturwabensysteme finden beispielsweise als Sandwichkerne für Leichtbauwerkstoffe Verwendung, deren Druckfestigkeit nicht allzu hoch ist.

Auch sind bestimmte Abstandsgewebe bekannt geworden, in denen zwei oder mehrere Gewebelagen mit Polfäden verbunden sind. Auch diese lassen sich mit Duromeren imprägnieren und aushärten, und man erhält eine Hohlräume-enthaltende, dreidimensionale Verbundwerkstoffkonstruktion, die ebenfalls einen Leichtbau ermöglicht. Auch hier kann die Druckfestigkeit nie allzu hoch werden, da die Polfäden nie genau in Richtung der Gewebeflächen-Normalen stehen, sondern schräg dazu.

Es wurde nun ein Leichtverbundwerkstoff gefunden, der dadurch erhalten wird, daß man ein Gestrick oder Gewirke (aus über 50 mm langen Verstärkungsfasern mit einem Hohlraumanteil von mindestens 50 Vol.-%) mit dem Duromeren imprägniert, welches schon davor eine valuminöse, dreidimensionale Maschenanordnung ganz bestimmter Geometrien aufweist, wobei zur Erhaltung dieser Form formgebende Werkzeuge nicht erfoderlich sind.

Nach Entfernung des nicht an den Verstärkungsfasern haftenden, überschüssigen Harzes (bzw. dessen Vorstufen) und Aushärtung des Gebildes wird ein Leichtverbundwerkstoff erhalten, welcher ausgezeichnete mechanische Eigenschaften (auch im Druckversuch) und große Restfestigkeit im Schadensfall (z.B. nach Durchstoßversuch) besitzt.

Bei den dreidimensional geordneten Verstärkungsfasern kann es sich um über 50 mm lange bis endlose Verstärkungsfasern handeln, die z.B. als Einzelfasern (Monofile), Rovings, Stränge, Garne, Zwirne oder Seile vorliegen können. Bevorzugt sind dreidimensionale Anordnungen, die aus Einzelfilamenten aufgebaut sind. Vorzugsweise weisen die einzelnen Filamente Durchmesser im Bereich von 0,5 bis 25 μm und Längen von 50 mm bis endlos auf. Unter endlosen Verstärkungsfasern bzw. Filamenten werden solche verstanden, die im allgemeinen eine Länge von über 50 m aufweisen, im speziellen aber solche, deren Länge etwa der Längenausdehnung der jeweiligen Leichtverbundwerkstoffteile entspricht.

Die chemische Zusammensetzung der Verstärkungsfasern kann verschieden sein. Wesentlich ist nur, daß die Verstärkungsfasern einen höheren Erweichungs-bzw. Schmelzpunkt besitzen, als die jeweils vorliegende Thermoplastmatrix. Beispiele für Fasermaterialien sind anorganische Materialien wie silikatische und nicht-silikatische Gläser der verschiedensten Art, Kohlenstoff, Bor, Siliciumcarbid, Metalle, Metallegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Liquid-crystal-Polymere, Polyphenylensulfide, Polyetherketone, Polyetheretherketone, Polyetherimide, Baumwolle und Cellulose. Bevorzugt sind hochschmelzende Materialien, beispielsweise Gläser, Kohlenstoff, Aramide, Liquid-crystal-Polymere, Polyphenylensulfide, Polyetherketone, Polyetheretherketone und Polyetherimide.

Die Verstärkungsfasern können in dem erfindungsgemäßen Leichtverbundwerkstoff gleichmäßig verteilt sein, sie können jedoch auch in bestimmten Teilen des Werkstoffs, z.B. in den Randbereichen und/oder besonderen Verstärkungszonen, in einem größeren Anteil vorhanden sein als in anderen Teilen des Werkstoffes.

Es ist ein wesentliches Merkmal des erfindungsgemäßen Leichtverbundwerkstoffs, daß die über 50 mm langen Verstärkungsfasern dreidimensional angeordnet sind. Man kann dies erreichen, indem man von einem Gebilde aus Verstärkungsfasern ausgeht, das beispielsweise einen Hohlraumanteil von mindestens 50 Vol.-%, vorzugsweise von 60 bis 97 Vol.-%, aufweist und dieses, z.B. wie weiter unten beschrieben, mit einem geeigneten Duromeren imprägniert.

Geeignete dreidimensionale Ausgangsgebilde aus über 50 mm langen Verstärkungsfasern sind z.B. alle flächigen Maschenanordnungen, z.B. Gestricke oder Gewirke, welche in Dickenrichtung ( = in Richtung der Flächennormalen) aufgrund spezifischer, geordneter Maschenausrichtung so komprimiert werden können, daß die Dicke des Gebildes aus Verstärkungsfasern im allgemeinen mindestens um 10 %, vorzugsweise um 40 bis 97 %, abnimmt. Solche geeigneten Ausgangsgebilde sind also z.B. alle in Dickenrichtung kampressiblen Gewirke, Gestricke, Nähwaren und Häkelwaren, die den oben genannten Mindest-Hohlraumanteil und bei Druckanwendung (von beispielsweise 50 bar) die oben angegebene Mindest-Dickenverringerung aufweisen. Es sind auch solche kompressiblen Ausgangsgebilde geeignet, welche durch Verwirken, Verstrikken und Vernähen von räumlichen textilen Verstärkungsfasergebilden (wie Gewirken, Gestricken, Näh- und Häkelwaren) erhältlich sind. Geeignet sind auch alle Arten von Hochflorwaren, beispielsweise auf Strickmaschinen, Kettwirkautomaten oder Raschelmaschinen hergestellte Bindungen mit Plüschfäden, Plüschschlingen oder gezielt eingebrachte Futterfäden sowie Frottierbindungen aller Art und Schneidplüsch. Dazu gehören auch kompressible Spezialgewirke, die auf Raschelmaschinen mit Spezialeinrichtungen, beispielsweise Vlies-, Deckenbruch-, Verbund- und Kreppeinrichtungen hergestellt wurden. Insbesondere gehören dazu Pelz-Gestricke oder Pelz-Gewirke, bei denen ein parallisiertes oder wirres Vlies so van den Nadeln der Maschine aufgenommen wurde, daß aus dem Vlies und einem zugeführten Faden Maschen gebildet werden, die das Vlies zusammenhalten. Diese Hochflorwaren, Spezialgewirke und Pelz-Gestricke sind vorzugsweise zweilagig so angeordnet, daß die gekräuselten Seiten oder die Vliesseiten einander zugewandt sind, so daß in den Außenzonen des sandwichartigen Gebildes höhere Verstärkungsfaser-Gehalte vorliegen.

Besonders bevorzugt sind Gestricke und Gewirke, die in Rechts/Rechts-(RR)-Bindung mit zwei Nadelreihen erhältlich sind, also z.B. RR-Flachgestricke, RR-Rundgestricke und RR-Flachgewirke wie sie z.B. auf Kettenwirkautomaten oder Raschelmaschinen erhältlich sind.

Bei den Strickbindungen kommen z.B. RR-Gestricke der Reihe 1/1, 2/2 ... n/n in Frage, weiterhin Bindungen vom Typ 1/2, 1/3 ... 1/n; 2/3, 2/4 ... 2/n und allgemein m/n. Ebenso sind RRG-Bindungen (Rechts/Rechts/gekreuzt) und RRg-Bindungen (Rechts/Rechts/gerippt) von Interesse und RR-Bindungen mit Henkeln, insbesondere alle Musterungen nach Art des Fang und Perlfang. Dazu gehören auch Muster, bei denen beispielsweise durch Anordnung von Henkeln gezielt Noppen und andere punktförmige oder lineare Verdickungen eingebracht wurden. Auch sogenannte Webstrickbindungen (s. Weber: Die Wirkerei und Strickerei, Melliand, Heidelberg, 1981, S. 80-83) oder entsprechende Wirkbindungen, die dehnungsarme Kombinationen von Maschen, Flottungen und Henkeln darstellen, sind von Interesse.

Vorteilhaft sind auch Bindungen, die mit gezogenen Nadeln erhältlich sind, beispielsweise die in den Figuren 1 bis 5 gezeigten 2/2- und 3/3-Bindungen.

Kurze Erläuterung der Figuren 1 bis 5:
x bedeutet gezogene Nadel,
. bedeutet vorhandene Nadel.

Figur 1 zeigt eine 2/2 RR-Bindung mit Nadeleinsatz 2:1.

Figur 2 zeigt eine 3/3 RR-Bindung mit Nadeleinsatz 3:1.

Figur 3 zeigt eine 3/3 RR-Bindung mit Nadeleinsatz 3:2.

Figur 4 zeigt eine 3/2 RR-Bindung, bei der die Zahl der rechten Maschenseiten auf der Vorder- und Rückseite gleich ist.

Figur 5 zeigt eine 3/2 RR-Bindung, bei der die Zahl der rechten Maschenseiten auf der Vorder- und Rückseite das Verhältnis 3:2 aufweist.

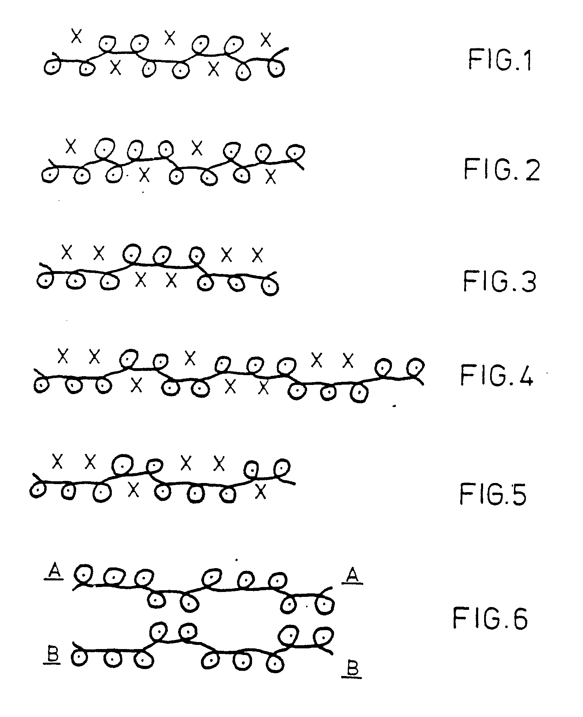

Bei Bindungen mit m = n ist hinsichtlich der Anzahl der rechten Maschenseiten auf beiden Seiten ein symmetrischer Aufbau möglich (siehe Figur 4), aber auch ein asymmetrischer (siehe Figur 5). Das Verstärkungsverhältnis zwischen den sich berührenden Oberflächen mehrlagiger Gebilde aus Verstärkungsfasern kann also für die jeweilige Anwendung des Leichtverbundwerkstoffs maßgeschneidert werden. Beispielsweise können zwei Lagen des in Figur 5 dargestellten Gestrickes so aufeinanderliegen, daß außen mehr Verstärkungsfasern vorliegen als innen (siehe Figur 6, entlang den Linien A-A und B-B liegen mehr Verstärkungsfasern vor als dazwischen). So kann in einer Art Sandwichstruktur eine erhöhte Biegefestigkeit erzielt werden. Ähnliche Konstruktionen wie die in Figur 6 dargestellte können auch mit anderen textilen Bindungen und/oder durch Kombination verschiedener Textilien realisiert werden.

Die große Vielfalt der möglichen Maschenbindungen erlaubt es, die Anordnung der Verstärkungsfasern auf die jeweilige Anwendung hin zu optimieren.

Der erfindungsgemäße Leichtverbundwerkstoff kann eine oder mehrere Lagen der Ausgangsgebilde aus Verstärkungsfasern mit dreidimensional geordneten Fasern enthalten. In verschiedenen Lagen können die Verstärkungsfasern gleich oder unterschiedlich ausgerichtet sein.

Zusätzlich zu den dreidimensional geordneten Verstärkungsfasern können erfindungsgemäße Leichtverbundwerkstoffe Deck- und/oder Zwischenschichten aus beliebigen anderen Materialien enthalten, beispielsweise Verbundlagen mit vorwiegend ein- oder zweidimensional angeordneten Verstärkungsfasern, etwa Gewebe in Leinwandbindung.

Die Duromermatrix erfindungsgemäßer Leichtverbundwerkstoffe kann aus verschiedenen duromeren Materialien bestehen. In Frage kommen beispielsweise Duroplaste im weitesten Sinne, d.h. Stoffe, die engmaschige, bie zur Zersetzungstemperatur vernetzte hochpolymere Harze darstellen. In Frage kommen also beispielsweise Phenolharze (z.B. aus Phenol und Formaldehyd hergestellt), Amidharze (z.B. aus Formaldehyd und Harnstoff oder Melamin oder Benzaguanamin oder Sulfonamid oder Anilin), duroplastische Polyester (z.B. ungesättigte Polyesterharze, Glyptale, Alkydharze, gesättigte, duroplastische Polyester), Epoxidsysteme, Acrylharze, Isocyanatsysteme, Polyurethane und Polyharnstoffe, Methacrylatharze, Novolakharze, Polybismaleinimide, Cyanatharze und mögliche Kombinationen von Reaktionsharzen.

Bevorzugte Duromersysteme sind Epoxidharze, ungesättigte Polyesterharze, Phenolharze und Amidharze.

Im erfindungsgemäßen Leichtverbundwerkstoff kann das Gewichtsverhältnis von Verstärkungsfasern zu Duroplast in weiten Grenzen variieren. Es sollte jedoch genügend Duroplast vorhanden sein, um die vorhandenen Verstärkungsfasern weitgehend oder vollständig zu imprägnieren und genügend Verstärkungsfasern, um eine ausreichende verstärkende Wirkung zu erzielen. Beispielsweise kann der Anteil der Verstärkungsfasern am erfindungsgemäßen Leichtverbundwerkstoff 15 bis 90 Gew.-% betragen. Vorzugsweise liegt dieser Anteil im Bereich 30 bis 85 Gew.-%.

Als Verfahren zur Herstellung der erfindungsgemäßen Leichtverbundwerkstoffe bieten sich die unterschiedlichsten Methoden an, mit welchen Verstärkungsfasergebilden duromerimprägniert werden können. So können duromere Einsatzmaterialien beispielsweise mit drucklosen Verfahren, wie beispielsweise dem Handverfahren aufgebracht werden. Dieses älteste Harz-Verarbeitungsverfahren überhaupt eignet sich z.B. für das Fertigen großflächiger Teile und kleiner Serien. Bei niedrigviskosen Harzen (z.B. ungesättigten Polyesterharzen) kann auch ein Niederdruckverfahren angewandt werden; man denke beispielsweise an ein Vakuum-Folienverfahren oder das Injektionsverfahren

Bei den Preßverfahren (z.B. zur Herstellung mittlerer bis großer Serien mit beidseitig glatten Oberflächen) eignen sich die verschiedenen Arten des Naßpressens, das kalte Naßpressen (mit hochreaktiven Harzen, z.B. ungesättigter Polyester) wie auch das warme Naßpressen zur Herstellung von Formteilen. Auch sei das Pressen vorimprägnierter Fasergebilde erwähnt (sog. Prepregs), bei welchem letztere bereits sämtliche Komponenten für das Herstellen des Preßteiles erhalten.

Grundsätzlich sei hier zur Anwendung von Drucken auf die erfindungsgemäßen voluminösen, dreidimensionalen Maschengebilde hingewiesen, daß hierbei letztere in der Regel komprimiert werden, daß aber (nach Abstreifen oder Abfließen überschüssigen Harzes) beim Aushärten des in den Verstärkungsfasern als Imprägnierung zurückgebliebenen Harzes, der Prozeß unter Zurücknahme des Druckes so geführt werden kann, daß sich die ursprüngliche valuminöse, dreidimensionale Verstärkungsfaserarchitektur im entstehenden Leichtverbundwerkstoff wieder einstellt.

Beim kontinuierlichen Herstellen endloser Prepregs bestimmter Breite kann z.B. an irgendeine Form der Impräg nierung mit einer oder mehreren Walzen gedacht werden. (Ob die oligomeren Harzeinsatzstoffe in Lösung oder als Schmelze eingebracht werden, ist hier nicht von Belang.) So kann das erfindungsgemäße, voluminöse, dreidimensionale Maschengebilde - gezogen durch am Ende der Anlage befindliche Abzugswalzen - über eine Imprägnierwalze oder durch den Spalt zweier oder mehrerer Imprägnierwalzen geführt werden. Hierbei kann, je nach vorgegebener Zugspannung, ein mehr oder weniger komprimiertes Prepreg-Halbzeug erhalten werden, welches dann beim späteren Aushärten (bei geringen Drucken) das Wiedererhalten der ursprünglichen dreidimensionalen Verstärkungsfasergeometrie ermöglicht.

Die vorliegende Erfindung betrifft auch Formteile und Fertigprodukte, welche die zuvor beschriebenen Leichtverbundwerkstoffe enthalten oder daraus bestehen. Bei solchen Formteilen und Fertigprodukten kann es sich beispielsweise um ebene Platten oder flächige oder gewölbte Teile handeln, wie sie beispielsweise im Fahrzeug-, Flugzeug-, Schiff-, Hoch-, Tief-, Apparate-und Gerätebau benötigt werden. Als Beispiele seien genannt Aufbauten für Fahrzeuge, Flugzeuge und Schiffe, Aufbauten für Transportfahrzeuge und Kühlfahrzeuge, Fahrzeugbodengruppen, Chassis, Gehäuse, Verkleidungen, Treppen, Dächer, Wände, Decken, Rahmen, Fensterrahmen, Badewannen, Schwimmbäder, Hallenkonstruktionen, Fußböden, Tore, Türen, Container, Tragwerke, Hütten, Uferbefestigungen, Abstützplatten, Schalungen, Planken, Tanks, Silos, Behälter, Sitzschalen, Schränke, Lärm-Dämmwände, Helme, Boote, Surfbretter, Musikinstrumente, Platinen, Parabolantennen, Holme, Rippen, Kühlschranktüren, Filter und Wärmetauscher. Bei den Form- und Fertigteilen kann es sich um tragende, selbsttragende, mittragende und nichttragende Teile handeln. Sie zeichnen sich durch geringe Raumgewichte, Korrosionsbeständigkeit, hohe Schlagzähigkeit, hohe Festigkeit, hohe Restfestigkeit nach Schädigung, hohe Schadenstoleranz, gutartiges Schadensverhalten mit hoher irreversibler Energieaufnahme, große Schallabsorption.

Ein wesentlicher Vorteil des erfindungsgemäßen Leichtverbundstoffes wie auch des hieraus erhaltenen Formteils bzw. Fertigproduktes ist es, daß unterschiedliche Drücke an verschiedenen Stellen des bereits imprägnierten und gerade aushärtenden Flächengebildes unterschiedliche Dicken bzw. unterschiedliche spezifische Gewichte in ein und demselben Teil in einem Arbeitsgang ermöglichen. Dies kann auch dadurch bewirkt werden, daß man das imprägnierte, dreidimensionale Maschengebilde in einem Formteil-Werkzeug aushärten läßt, welches unterschiedliche Höhen aufweist und so unterschiedliche hohe Räume anbietet, welche von den kompressiblen Maschen jeweils vollständig ausgefüllt werden können.

Mit der Dicke ändern sich im allgemeinen das Raumgewicht und die mechanischen Eigenschaften, insbesondere die Biegesteifigkeit, die Druck- und Zugfestigkeit und die Energieabsorption. Damit bietet sich die Möglichkeit, ein Formteil aus erfindungsgemäßem Leichtverbundwerkstoff allein durch unterschiedliche Dicke des Werkstoffes auf die konkrete Anwendung hin maßzuschneidern. Weitere Gestaltungsmöglichkeiten sind durch die Anordnung der Verstärkungsfasern in dem ursprünglich eingesetzten Gebilde aus Verstärkungsfasern gegeben.

Der erfindungsgemäße Verbundwerkstoff und der erfindungsgemäße Leichtverbundwerkstoff können in beliebigen Formen vorliegen, beispielsweise in ebener Form (z.B. Platten oder Bahnen) oder auch in gewölbten Formen, wie sie durch Pressen in Preßformen auf einer statischen Presse erhältlich sind.

Beispiel

A Herstellung des Leichtverbundwerkstoffs

Mit E-Glasfasern (Titer 320 tex) (Owens Corning Fiberglass) wurde ein 1/1-Perlfang-Gestrick hergestellt:
- Abstand von Maschenreihe zu Maschenreihe 3,5 mm
- Höhe 4,6 mm
- Flächengewicht 1.005 g/m²
Drei Lagen dieses Gestrickes wurden übereinandergestapelt und mit Glasgewebe-Deckflächen (Köperbindung 395 g/m²) versehen. Sodann wurde ein ungesättigtes Polyesterharz, enthaltend 1,5 Gew.% Tertiärbutylperbenzoat-Härter (Leguval W 25, Bayer AG), in einer Menge von 32 Gew.-%, bezogen auf Glas, zugegeben und der gesamte Stapel vier Sekungen lang bei 120°C mit 30 bar verpreßt. Dann wurden die Preßplatten auf 16 mm Abstand geöffnet, und das gebildete Verbundmaterial anschließend 10 min lang bei 120°C ausgehärtet.

Aus diesem Verbundmaterial wurden Probekörper der Größe 40 mm x 40 mm (Höhe 16 mm) hergestellt und folgenden Druckversuchen unterzogen:

B Druckversuche

In Anlehnung an DIN 53 291 wurde mit den Probekörpern ein Kurzzeitdruckversuch durchgeführt. Hierbei wurde das Verbundmaterial auf einer Instron-Universalprüfmaschine mit einer Prüfgeschwindigkeit von 1 mm/min bis zu 10 % der Ausgangsdicke gestaucht. Es wurde der Kraftverlauf in Abhängigkeit des Verformungsweges registriert. Bei 10 % Stauchung ergab sich eine Druckfestigkeit van 0,8 MPa.

Außerdem wurde das Material zyklisch von 2,5 % fortschreitend bis zu 60 % gestaucht. Insgesamt hatte nach 60 % Stauchung der Probekörper (mit gleicher Dimension wie oben beschrieben) eine Energie von 16 Nm aufgenommen.

Die relativ hohe Druckfestigkeit und die große Energiedissipation bei zyklischer Stauchung deuten auf eine hohe Schadenstoleranz und eine große Restfestigkeit des Materials hin.

**Ansprüche**

1. Leichtverbundwerkstoff, erhalten dadurch, daß in einem voluminösen, dreidimensionalen Gebilde aus über 50 mm langen Verstärkungsfasern, die in Form eines Gestrickes oder Gewirkes mit einem Hohlraumanteil von mindestens 50 Vol.-% vorliegen, ein duromeres Harz so eingebracht wird, daß im Leichtverbundwerkstoff Hohlräume enthalten sind.

2. Verfahren zur Herstellung eines Leichtverbundwerkstoffes gemäß Anspruch 1, dadurch gekennzeichnet, daß man ein Gestrick oder Gewirke aus Verstärkungsfasern mit den Einsatzstoffen eines duromeren Harzes imprägniert, das nicht an den Verstärkungsfasern haftende Harz entfernt und das Gebilde dann aushärtet.

3. Leichtverbundwerkstoff gemäß Anspruch 1, dadurch gekennzeichnet, daß der Anteil der Verstärkungsfasern am gesamten Werkstoff 15 bis 90 Gewichtsprozent beträgt.

4. Formteile und Fertigprodukte, dadurch gekennzeichnet, daß sie aus dem Leichtverbundwerkstoff gemäß Ansprüchen 1 und 3 bestehen oder diesen enthalten.

5. Formteile oder Fertigteile gemäß Anspruch 4, dadurch gekennzeichnet, daß der Leichtverbundwerkstoff auf einer oder auf beiden Außenflächen von festeren und weniger dicken Verstärkungsfaser-Textilgebilden begrenzt wird, die ebenfalls polymerimprägniert sind.

FIG.1

FIG.2

FIG.3

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 148 760  (THE WIGGINS TEAPE GROUP) <br> * Das ganze Dokument * | 1,2 | B 29 C   67/14 <br> B 29 B   15/12 |
| A | | 3-5 | |
| Y | EP-A-0 227 570  (SOCIETE CIVILE D'INVENTEURS) <br> * Spalten 1-2; Ansprüche 1,6 * | 1,2 | |
| A | EP-A-0 165 128  (AEROSPATIALE) <br> * Ansprüche 1-4 * | 1,2 | |
| A | EP-A-0 150 570  (OTTY, MALCOLM) <br> * Seite 11, Zeilen 15-22; Ansprüche 1-3, 8-10 * | 1,2,5 | |

**RECHERCHIERTE SACHGEBIETE (Int. Cl.5)**

B 29 C
B 29 B

Der vorliegende Recherchenbericht wurde für alle Patentansprüche erstellt

| Recherchenort | Abschlußdatum der Recherche | Prüfer |
|---|---|---|
| DEN HAAG | 17-09-1990 | DURAND F.C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
    Dokument

EPO FORM 1503 03.82 (P0403)